# FASCICULE DE BREVET EUROPEEN

(11) **EP 2 652 336 B1**
(45) Date de publication et mention de la délivrance du brevet: **01.05.2019**
(21) Numéro de dépôt: 11817347.5
(22) Date de dépôt: 15.12.2011
(51) Int. Cl.: F04D 29/32, F01D 5/14, F01D 5/20

(54) **AUBE DE TURBOMACHINE A LOI D'EMPILAGE AMÉLIORÉE**
TURBOMASCHINENSCHAUFEL MIT VERBESSERTER FÄDELLINIE
TURBOMACHINE BLADE WITH IMPROVED STACKING LINE

(30) Priorité: 15.12.2010 FR 1060538
(43) Date de publication de la demande: 23.10.2013
(73) Titulaire: Safran Aircraft Engines, 75015 Paris (FR)
(72) Inventeur: PESTEIL, Agnès, F-94140 Alfortville (FR); PERROT, Vincent, F-94700 Maisons Alfort (FR)
(74) Mandataire: Gevers & Orès
(86) Numéro de dépôt international: PCT/FR2011/053000
(87) Numéro de publication internationale: WO 2012/080669

(56) Documents cités:
- EP-A1- 1 953 344
- EP-A2- 2 226 468
- US-A1- 2001 014 285
- US-A1- 2004 136 830
- US-A1- 2009 013 532
- US-B1- 6 341 942

## Description

Le domaine de la présente invention est celui de la thermodynamique et plus particulièrement celui des aubes pour les compresseurs ou les turbines des turbomachines.

Les turbomachines aéronautiques sont classiquement constituées, depuis l'amont vers l'aval dans le sens de l'écoulement des gaz, d'une soufflante, d'un ou plusieurs étages de compresseurs, par exemple un compresseur basse pression et un compresseur haute pression, d'une chambre de combustion, d'un ou plusieurs étages de turbines, par exemple une turbine haute pression et une turbine basse pression, et d'une tuyère d'échappement des gaz. Le ou les compresseurs sont réalisés sous la forme d'une pluralité d'aubages mobiles tournant devant une pluralité d'aubages fixes appelés redresseurs. Les aubages mobiles sont disposés de façon régulière sur la périphérie d'un disque entraîné par le rotor de la turbomachine, et leurs pales s'étendent radialement entre le disque du rotor et un carter qui referme la veine d'air.

Chaque aube mobile comporte une face intrados sur laquelle l'air de la veine est en surpression par rapport à la pression moyenne qui règne aux alentours de la pale de l'aube, et une face extrados sur laquelle l'air est en dépression par rapport à cette pression moyenne. Il s'ensuit qu'un circuit d'air se met en place à l'extrémité externe de l'aube, qui tend à faire passer de l'air de l'intrados vers l'extrados au travers du jeu existant entre l'aube et le carter. De façon connue cette circulation d'air se développe tout le long de la corde de l'aube et prend la forme d'un tourbillon, dit tourbillon de jeu, qui se propage en aval du bord de fuite de l'aube.

La présence de ce tourbillon perturbe l'écoulement dans les étages plus aval du compresseur et crée des pertes néfastes pour le rendement du compresseur. Il serait donc souhaitable de supprimer ce tourbillon ou tout au moins de réduire le débit d'air qu'il véhicule.

Des tentatives ont été faites pour essayer de contrôler ce tourbillon, comme par exemple des traitements appliqués au carter entourant le compresseur ou la création de "trenchs", c'est-à-dire de cavités creusées dans ce carter. Un exemple de tels traitements est décrit dans la demande de brevet de la demanderesse publiée sous le numéro FR 2940374. Elles présentent toutes l'inconvénient de générer des coûts supplémentaires pour la réalisation de la turbomachine et peuvent dégrader les performances en rendement du compresseur à certains points de fonctionnement.

Des demandes de brevet ont également été déposées pour tenter de réduire l'impact de ce tourbillon sur le rendement d'un étage de compresseur, ou de turbine, comme par exemple les demandes US 2010/0054946 ou EP 1953341. Elles prévoient de modifier la forme des aubes en jouant sur la forme donnée au bord d'attaque, c'est à dire en faisant évoluer son angle de flèche (sweep angle) entre le pied et la tête de l'aube le long de ce bord d'attaque. Elles ne donnent pas d'indication, en dehors de la figure 12 du document américain, sur l'évolution de la ligne d'empilage des profils élémentaires le long de la hauteur de l'aube.

Par ailleurs le document US 6341942 décrit des ondulations le long de la hauteur d'une aube de compresseur dans le but d'augmenter sa rigidité en flexion, sans accroître sa masse. S'il indique qu'une ondulation peut se situer en position haute sur l'aube, il ne précise pas la position du point d'inversion de la courbure qui y est associée, ni a fortiori celle du point d'inflexion le plus bas dans le cas d'une double inflexion. Par ailleurs, en mettant en exergue le problème de la tenue vibratoire de l'aube, il ne présente a priori aucun intérêt pour un homme du métier qui se poserait la question d'améliorer le rendement d'un étage par un contrôle du tourbillon de jeu. La présente invention a pour but d'améliorer le plus possible le rendement d'un étage de compresseur, ou de turbine, d'une turbomachine, en donnant une forme particulière à l'aube qui réduise l'impact de cet écoulement de fuite entre l'intrados et l'extrados de la pale, sans qu'il soit besoin de modifier le carter du compresseur. A cet effet, l'invention a pour objet une aube de turbomachine selon la revendication 1.

Ces modifications d'empilage permettent, en guidant mieux l'écoulement, de réduire le tourbillon de jeu généré par la pale. Des calculs ont en effet montré que l'effet bénéfique apporté par l'invention ne se conserve pas si l'inversion est positionnée en dessous de ces trente derniers pourcents. L'impact d'éventuelles ondulations qui seraient plus éloignées de la tête de l'aube serait faible du fait de leur faible interférence sur le tourbillon de jeu.

Avantageusement ladite ligne d'empilage comporte une double inversion dite "axiale" du sens de sa courbure sur les trente derniers pourcents de la hauteur de la pale. Préférentiellement la ou les deux inversions sont situées sur les dix derniers pourcents de la hauteur de la pale.

L'invention porte également sur un compresseur ou sur une turbine pour turbomachine comportant au moins une roue mobile constituée d'aubes telles que décrites ci-dessus, et sur une turbomachine comportant un tel compresseur ou une telle turbine.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Dans la suite de la description les références axiales et tangentielles se comprennent en référence à l'axe de rotation de la turbomachine, la direction axiale étant confondue avec cet axe de rotation et la direction tangentielle étant orientée selon une tangente à la circonférence de la turbomachine. Par convention dans la suite de la description, la direction dite axiale en se référant à une aube est sensiblement celle d'une parallèle à la corde en tête de l'aube, alors que la direction dite tangentielle correspond sensiblement à une direction perpendiculaire à la corde en tête de l'aube.

Sur ces dessins :
- la figure 1 est une vue en perspective de deux aubes adjacentes d'un compresseur, selon l'art antérieur ;
- la figure 2 est une vue de face d'une aube de compresseur selon un premier mode de réalisation de l'invention ;
- la figure 3 est une vue de profil de l'aube de la figure 2 ;
- les figures 4 et 5 montrent les évolutions sur l'empilage des profils appliquées à une aube, respectivement en axial et en tangentiel, selon le premier mode de réalisation, et
- les figures 6 et 7 montrent les évolutions sur l'empilage des profils appliquées à une aube, respectivement en axial et en tangentiel, selon un second mode de réalisation,
- la figure 8 donne un exemple d'amélioration du rendement d'un étage de compresseur qui comporte des aubes mobiles selon les figures 2 ou 3.

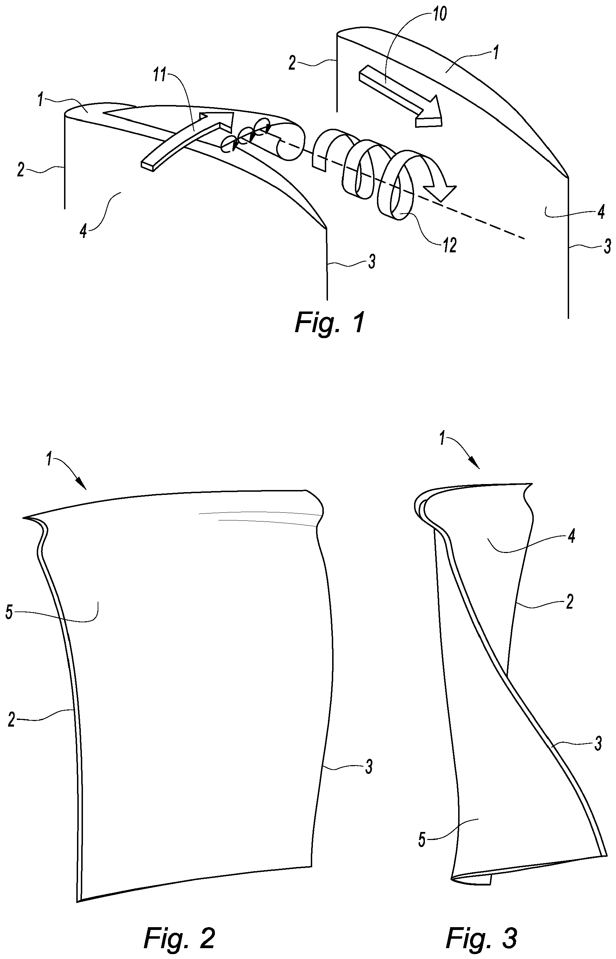

En se référant à la figure 1, on voit deux aubes 1 d'un compresseur d'une turbomachine aéronautique, selon l'art antérieur, s'étendant entre un bord d'attaque 2 et un bord de fuite 3, avec une face intrados 4 et une face extrados 5. Les deux aubes représentées sont positionnées côte à côte et guident l'écoulement principal 10 du flux d'air à comprimer. Du fait de la surpression existant sur l'intrados 4 de chaque aube 1 et de la dépression existant sur son extrados 5, un écoulement de fuite 11, dirigé de l'intrados vers l'extrados, s'établit à l'extrémité haute de l'aube, au niveau du jeu existant avec le carter. Cet écoulement se produisant sur toute la longueur de la corde de l'aube 1, il se développe sous la forme d'un tourbillon de jeu 12 qui se propage en aval de l'aube, dans l'axe de sa corde, ce qui dégrade le rendement du compresseur.

Les figures 2 et 3 montrent la pale d'une aube 1 selon l'invention, respectivement de face, vue du côté extrados 5, et de profil, vue depuis le bord de fuite 3. Le pied de l'aube, normalement situé en bas de la figure, n'est pas représenté.

La forme de la pale peut être définie comme une série de profils élémentaires, en forme de section d'aile, le long desquels s'écoule l'air à comprimer, ces profils étant empilés les uns sur les autres le long d'une ligne, appelée ligne d'empilage, partant du pied et aboutissant en tête de la pale en reliant les centres de gravité des diverses sections. La forme de l'aube peut être définie, outre les évolutions des profils élémentaires entre la partie basse et la partie haute de la pale, par, d'une part, la rotation appliquée au profil élémentaire en fonction de sa position sur la hauteur de la pale et, d'autre part, la forme donnée à cette ligne d'empilage.

Sur une aube de l'art antérieur la courbure de la ligne d'empilage évolue assez peu entre le pied et la tête de la pale de l'aube 1 ; elle présente généralement une forme convexe à sa partie supérieure (typiquement sur la zone comprise entre 20 et 100 % de la hauteur), ce qui se traduit par une conservation du sens de la courbure de la ligne d'empilage. La figure 12 du document US 2010/0054946 montre une inversion de la courbure de l'aube qui se situe à une hauteur faible de l'aube et qui, du fait de ce positionnement bas, n'a pas d'influence sur le tourbillon de jeu et sur l'impact qu'il a sur le rendement de l'étage auquel appartient l'aube.

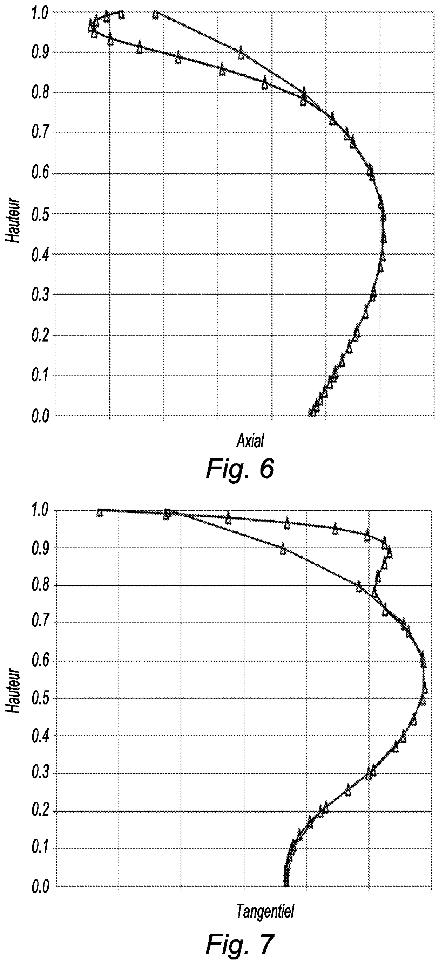

Dans le cas de l'invention, et plus particulièrement celle de l'aube représentée sur les figures 2 et 3, cette ligne d'empilage comporte deux changements de courbure dans le sens axial et deux changements de courbure dans le sens tangentiel, ces changements se produisant sur les dix derniers pourcents de la hauteur de la pale. Dans l'exemple représenté la modification axiale d'empilage est dite positive, le premier changement de courbure (vu en se dirigeant du pied vers la tête), entraînant un décalage de l'empilage vers le bord de fuite. Dans un autre mode de réalisation (représenté sur la figure 6), le décalage peut être négatif, l'invention ne prévoyant qu'un seul changement de courbure qui ramène alors les empilements vers le bord de fuite à partir d'une position déjà fortement décalée vers le bord d'attaque. En ce qui concerne la modification tangentielle de l'empilage, elle est positive sur les figures 2 et 3, c'est-à-dire que la ligne d'empilage se déforme en direction de l'extrados sur le premier changement de courbure ; elle revient ensuite en direction de l'intrados sur le deuxième changement de courbure.

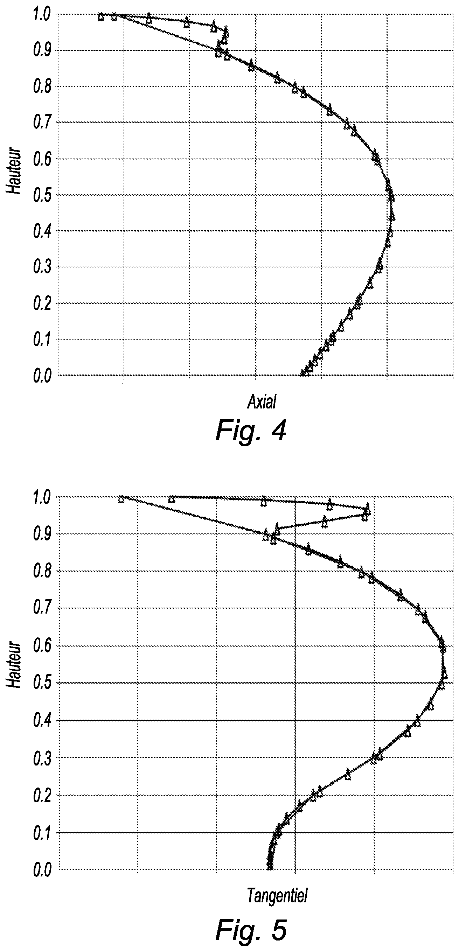

En se référant maintenant aux figures 4 et 5 on voit la forme de la ligne d'empilage d'une aube selon le premier mode de réalisation de l'invention, en projection le long de la hauteur de l'aube, sur des plans orientés sensiblement, respectivement, axialement et tangentiellement, c'est-à-dire parallèlement ou perpendiculairement à la corde de l'aube. Dans ce premier mode de réalisation, la modification de la courbure de la ligne d'empilage n'intervient que sur ses 10 derniers pourcents (qui sont comptés en partant d'un zéro pris conventionnellement au niveau du pied de l'aube, et en se dirigeant vers la tête de celle-ci dont la valeur correspond alors à 100%). La figure 4 donne la déformation axiale de la ligne d'empilage de la pale, c'est-à-dire la forme qu'a sa projection sur un plan orienté radialement et parallèlement à la corde de celle-ci ; elle donne cette déformation dans deux configurations, une selon l'art antérieur (ligne convexe) et une selon l'invention (courbe présentant un double changement de courbure). La figure 5 donne les mêmes évolutions tangentielles de la ligne d'empilage, c'est-à-dire la forme qu'a sa projection sur un plan orienté radialement et perpendiculairement à la corde de la pale.

Alors que les aubes de l'art antérieur présentent, axialement, une forme convexe, c'est à dire qu'elles ont une courbure qui reste de signe constant, la pale selon le premier mode de réalisation conserve une courbure identique à celle de l'art antérieur sur 90% de sa hauteur, avant de se retourner une première fois en direction du bord de fuite, pour se retourner à nouveau et revenir vers le bord d'attaque ; elle se retrouve finalement, en tête de la pale, pratiquement au niveau de l'aube de l'art antérieur. On constate ainsi un double changement du sens de la courbure axiale de la pale sur ses dix derniers pourcents de hauteur. On retrouve le même phénomène dans le sens tangentiel, avec une pale de l'art antérieur qui présente une courbure de signe constant sur la majeure partie de sa hauteur, et en tout état de cause sur ses derniers 80%. La pale selon le premier mode de réalisation de l'invention présente la même forme que l'art antérieur sur les 90 premiers pourcents de sa hauteur, avant de s'en distinguer par deux changements de courbure, un premier déplaçant sa ligne d'empilage en direction de l'extrados, suivi d'un second qui ramène pratiquement cette ligne d'empilage au niveau de celle de l'aube de l'art antérieur.

De façon similaire les figures 6 et 7 montrent un deuxième mode de réalisation de l'invention, les évolutions de la forme de la ligne d'empilage se produisant, dans ce cas, sur les trente derniers pourcents de la hauteur de la ligne d'empilage. Dans ce deuxième mode la déformation axiale de la ligne d'empilage ne présente qu'un seul changement de courbure, celle-ci étant plus prononcée que pour l'art antérieur sur les 25 premiers des trente derniers pourcents, pour s'inverser sur les cinq derniers pourcents et se rapprocher de la ligne d'empilage de l'art antérieur. La déformation tangentielle présente, quant à elle, le même double changement de courbure que dans le premier mode de réalisation.

Dans les deux modes de réalisation, comme cela est illustré sur les figures 5 et 7, on observe que la déformation tangentielle de la ligne d'empilage s'aplatit très fortement en arrivant en tête de l'aube et que la tangente à cette ligne devient, en tête, contenue dans le plan tangent au cylindre que décrit la corde en tête d'aube, lors de la rotation de la turbomachine. Il en est de même pour la déformation axiale de cette ligne d'empilage dans le premier mode de réalisation (cf. figure 4).

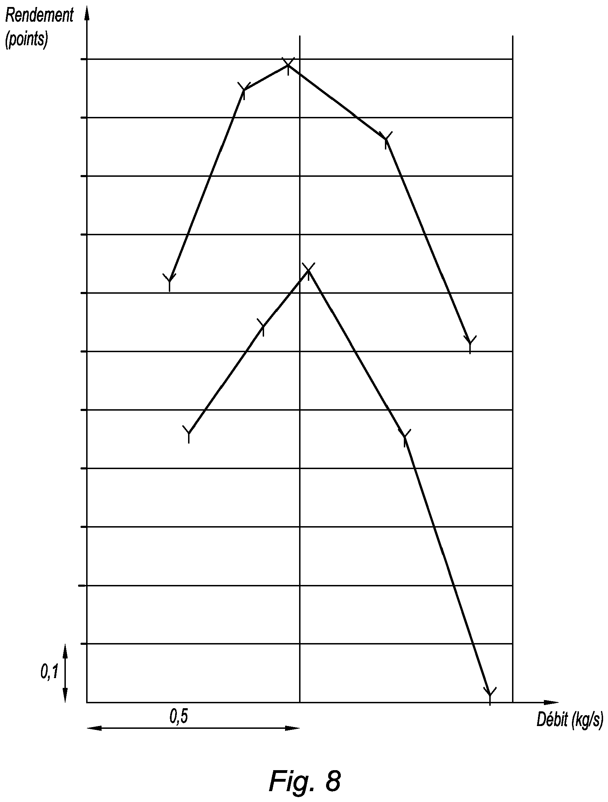

La figure 8 montre l'amélioration sur les performances, obtenues par un calcul tridimensionnel Navier-Stokes, d'un étage de compresseur selon l'invention par rapport à un étage réalisé de façon classique. Les deux courbes figurent les points obtenues à iso-vitesse de rotation pour un étage de l'art antérieur (courbe du bas) et un étage selon l'invention (courbe du haut). L'abscisse représente, avec pour unité un pas de 0.5kg/s, l'évolution du débit d'air traversant l'étage et les ordonnées indiquent, avec un pas de 0.1 point, le rendement obtenu pour les divers points d'essais. Le point le plus à gauche représente le point situé sur la ligne de pompage de cet étage et le point le plus à droite celui situé sur la ligne de fonctionnement de l'étage, qui est a priori retenue lors de la conception du compresseur. Entre les deux, l'étage passe par un point dit de rendement maximal, dont on essaie de se rapprocher lors du positionnement de la ligne de fonctionnement du compresseur complet.

Les aubes modifiées selon l'invention ont fait l'objet d'évaluations sur le plan aérodynamique à l'aide de codes de calcul tridimensionnels permettant la résolution des équations de Navier-Stokes. Les résultats obtenus se présentent, dans les deux modes de réalisation, de la façon suivante, le rendement d'un compresseur étant défini, entre 0 et 100 points, par le rapport du travail réellement fourni au fluide pour une augmentation de pression donnée, sur le travail idéal (transformation isentropique) qu'il faudrait fournir pour la même augmentation de pression :
- pour une aube modifiée sur les dix derniers pourcents de la hauteur de sa pale, on constate en moyenne, pour chaque étage, un gain de rendement de 0,15 points, par rapport à l'art antérieur, au niveau de la ligne de fonctionnement du compresseur (dans un diagramme donnant le rapport de pression obtenu en fonction du débit). Au niveau de la ligne de pompage le gain obtenu se situe, en moyenne, aux environs de 0,30 points par rapport à l'art antérieur. Ce gain en marge au pompage peut être converti en un gain de rendement sur la ligne de fonctionnement en rapprochant de celle-ci la ligne de pompage par une modification des angles d'attaque des aubes par rapport au flux d'air. L'apport des aubages selon l'invention représente donc une amélioration sensible par rapport aux aubages de l'art antérieur.
- les aubes modifiées sur leurs trente derniers pourcents de hauteur donnent des résultats sensiblement identiques.
- en revanche la modification des aubes sur une hauteur supérieure à ces trente derniers pourcents ne donne plus de gain significatif. Ceci peut s'expliquer par une plus grande distance des ondulations de l'aube par rapport à la tête de celle-ci et donc par une influence sur le tourbillon de jeu qui devient négligeable.

L'invention a été décrite avec des aubes de compresseur. Des améliorations similaires peuvent être obtenues sur des aubes de turbine qui présentent, dans l'art antérieur, le même problème de contrôle des tourbillons de jeu.

## Revendications

1. Aube de turbomachine dont la pale s'étend radialement entre un pied de pale et une tête de pale, axialement entre un bord d'attaque (2) et un bord de fuite (3) et tangentiellement entre une face intrados (4) et une face extrados (5), le profil de ladite aube étant constitué par une série de profils élémentaires, en forme de section d'aile, empilés les uns sur les autres le long d'une ligne d'empilage joignant le centre de gravité de l'ensemble des sections,
la projection de ladite ligne d'empilage de la pale sur au moins un premier plan s'étendant radialement à partir du pied de l'aube et orienté sensiblement perpendiculairement à la corde de l'aube comportant une double inversion dite « tangentielle », du sens de courbure située sur les trente derniers pourcents de la hauteur de la pale,
**caractérisée en ce que**, en outre, la projection de la ligne d'empilage de la pale sur un deuxième plan s'étendant radialement à partir du pied de l'aube et orienté sensiblement parallèlement à la corde de l'aube comporte une inversion dite « axiale » du sens de sa courbure située sur les trente derniers pourcents de la hauteur de la pale.

2. Aube de turbomachine selon la revendication 1 dans laquelle ladite ligne d'empilage comporte une double inversion dite « axiale » du sens de sa courbure sur les trente derniers pourcents de la hauteur de la pale.

3. Aube de turbomachine selon l'une des revendications 1 ou 2 dans laquelle la ou les inversions de courbure sont situées sur les dix derniers pourcents de la hauteur de la pale.

4. Compresseur pour turbomachine comportant au moins une roue mobile constituée d'aubes selon l'une des revendications 1 à 3.

5. Turbine pour turbomachine comportant au moins une roue mobile constituée d'aubes selon l'une des revendications 1 à 3.

6. Turbomachine comportant un compresseur ou une turbine selon, respectivement, l'une des revendications 4 ou 5.

## Patentansprüche

1. Turbinenmotorschaufel, deren Schaufel sich radial zwischen einem Schaufelfuß und einem Schaufelkopf, axial zwischen einer Angriffskante (2) und einer Hinterkante (3) und tangential zwischen einer Innenfläche (4) und einer Außenfläche (5) erstreckt, wobei das Profil der Schaufel aus einer Reihe von elementaren Profilen besteht, in einer Form eines Flügelquerschnitts, die aufeinander entlang einer Stapellinie gestapelt sind, die den Schwerpunkt der Gesamtheit der Querschnitte verbindet,
wobei die Projektion der Stapellinie der Schaufel auf mindestens einer ersten Ebene, die sich radial vom Schaufelfuß erstreckt und im Wesentlichen senkrecht zur Schaufelsehne ausgerichtet ist, eine doppelte "tangential" genannte Umkehrung der Richtung der Krümmung aufweist, die sich auf den dreißig letzten Prozenten der Höhe der Schaufel befindet,
**dadurch gekennzeichnet, dass** weiter die Projektion der Stapellinie der Schaufel auf einer zweiten Ebene, die sich radial vom Schaufelfuß erstreckt und im Wesentlichen parallel zur Schaufelsehne ausgerichtet ist, eine "axial" genannte Umkehrung der Richtung ihrer Krümmung aufweist, die sich auf den dreißig letzten Prozenten der Höhe der Schaufel befindet.

2. Turbinenmotorschaufel nach Anspruch 1, wobei die Stapellinie eine doppelte "axial" genannte Umkehrung der Richtung ihrer Krümmung auf den dreißig letzten Prozenten der Höhe der Schaufel aufweist.

3. Turbinenmotorschaufel nach einem der Ansprüche 1 oder 2, wobei sich die Umkehrung(en) der Krümmung auf den zehn letzten Prozenten der Höhe der Schaufel befinden.

4. Kompressor für eine Turbomaschine, aufweisend mindestens ein bewegliches Rad, das aus Schaufeln nach einem der Ansprüche 1 bis 3 besteht.

5. Turbine für eine Turbomaschine, aufweisend mindestens ein bewegliches Rad, das aus Schaufeln nach einem der Ansprüche 1 bis 3 besteht.

6. Turbomaschine, aufweisend einen Kompressor oder eine Turbine jeweils nach einem der Ansprüche 4 oder 5.

## Claims

1. Turbine blade, the airfoil of which extends radially between an airfoil root and an airfoil tip, axially between a leading edge (2) and a trailing edge (3), and tangentially between a pressure side (4) and a suction side (5), the profile of said blade consisting of a series of basic profiles, in the form of a wing section, stacked on one another along a so-called stacking line connecting the centre of gravity of all the sections, the projection of said stacking line of the airfoil on at least one plane extending radially from the blade root and oriented substantially perpendicular to the chord of the blade comprising a so-called double "tangential" inversion of the direction of the curvature located in the last thirty percent of the height of the airfoil, **characterised in that**, furthermore, the projection of the stacking line of the airfoil on a second plane extending radially from the blade root and oriented substantially parallel to the chord of the blade comprises a so-called "axial" inversion of the direction of the curvature thereof located in the last thirty percent of the height of the airfoil.

2. Turbine blade according to claim 1, wherein said stacking line comprises a so-called double "axial" inversion of the direction of the curvature thereof over the last thirty percent of the height of the airfoil.

3. Turbine blade according to one of claims 1 or 2, wherein the curvature inversion or inversions are located in the last ten percent of the height of the airfoil.

4. Compressor for turbine engine comprising at least one movable wheel formed of blades according to one of claims 1 to 3.

5. Turbine for turbine engine comprising at least one movable wheel formed of blades according to one of claims 1 to 3.

6. Turbine engine comprising a compressor or a turbine according to, respectively, one of claims 4 or 5.
